# EUROPEAN PATENT APPLICATION

(11) **EP 4 431 984 A1**
(43) Date of publication of application: **18.09.2024**
(21) Application number: 23162335.6
(22) Date of filing: 16.03.2023
(51) Int. Cl.: G01S 13/937, G01S 13/86, G01S 13/42, G08G 3/00, G01C 21/16

(54) **METHOD AND A SYSTEM FOR DETERMINING A MOTION OF AN EGO VESSEL, AND METHOD FOR DETERMINING A MAP FOR MARITIME NAVIGATION**

(71) Applicant: ABB SCHWEIZ AG, 5400 Baden (CH)
(72) Inventor: MARANO, Stefano, 8050 Zurich (CH); MAAS, Deran, 8046 Zurich (CH); ARSENALI, Bruno, 5200 Brugg (CH); SCHILLER, Carl Henrik, 9308 Lömmenschwil (CH); ISAKSSON, Alf, 723 53 Västerås (SE)
(74) Representative: Sykora & König Patentanwälte PartG mbB

(57) **Abstract**

A method and a system for determining a motion of an ego vessel (18) are disclosed. The method comprises: receiving radar data of a radar measurement of surroundings of the ego vessel (18); receiving solid object data which are representative for one or more solid objects within the surroundings of the ego vessel (18); determining dynamic object data from the solid object data, wherein the dynamic object data are representative for one or more dynamic objects of the solid objects encoded in the solid object data; and determining the motion of the ego vessel (18) depending on the radar data and the dynamic object data.

## Description

### FIELD OF THE INVENTION

The invention relates to the field of maritime navigation. In particular, the invention relates to a method and a system for determining a motion of an ego vessel, and to a method for determining a map for maritime navigation.

### BACKGROUND OF THE INVENTION

Modern maritime navigation depends heavily on Global Navigation Satellite System (GNSS). A number of activities rely on crucial information from GNSS signals, including docking, coastal navigation, and open sea navigation. As GNSS signals reach earth with a very small amount of electromagnetic power, they are susceptible to both intentional and unintentional jamming. Unfortunately, GNSS jamming is becoming increasingly common.

Several systems employing radars for positioning and motion determination already exist. In fact, radar can provide detailed information about the surroundings of an ego vessel. For example, a radar-based localization approach may enable to construct a map of an environment of the ego vessel using measured radar returns, e.g. as described in US 95 81 695 B2. The construction of the map may be aided by availability of GNSS or not.

Such map may be stored on the ego vessel and may be used at a later stage for a localization of the ego vessel. In this localization procedure, an actual position of the ego vessel may be unknown and the current radar measurement may be compared with the map. From this comparison, it may be possible to establish the current location of the ego vessel, e.g. as described in "Robust naval localization using a particle filter on polar amplitude gridmaps", H. Schiller, S. Maranò, D. Maas, B. Arsenali, A. J. Isaksson and F. Gustafsson, 2021 IEEE 24th International Conference on Information Fusion (FUSION), Sun City, South Africa, 2021, pp. 1-8, doi: 10.23919/FUSION49465.2021.9627025. In particular, it is described in this reference how GNSS may be used to build a radar-based map. Then, in absence of the GNSS, radar is used to find the position of the ego vessel in the map.

As another example, in a radar-based odometry approach, consecutive radar measurements may be compared with each other. From such comparison it may be possible to extract information about the displacement and/or motion of the ego vessel, e.g. as described in "Improving Marine Radar Odometry by Modeling Radar Resolution and Exploiting Additional Temporal Information", H. Schiller, B. Arsenali, D. Maas and S. Maranó, 2022 IEEE/RSJ International Conference on Intelligent Robots and Systems (IROS), Kyoto, Japan, 2022, pp. 8436-8441, doi: 10.1109/IROS47612.2022.9981293., wherein this reference focusses on marine vessels and describes an estimation of the motion, a velocity, and rate of turn of the ego vessel; or as described in "Precise Ego-Motion Estimation with Millimeter-Wave Radar Under Diverse and Challenging Conditions", S. H. Cen and P. Newman, 2018 IEEE International Conference on Robotics and Automation (ICRA), Brisbane, QLD, Australia, 2018, pp. 6045-6052, doi: 10.1109/ICRA.2018.8460687, wherein this reference describes an estimation of the velocity using radar for automotive applications; or as described in "An EKF Based Approach to Radar Inertial Odometry", C. Doer and G. F. Trommer, 2020 IEEE International Conference on Multisensor Fusion and Integration for Intelligent Systems (MFI), Karlsruhe, Germany, 2020, pp. 152-159, doi: 10.1109/MFI49285.2020.9235254, wherein this reference describes how to user radar and IMU to estimate the position and the velocity of the ego vessel. In fact, assuming that the surroundings of the ego vessel are static and do not change over time, the radar measurements collected while the ego vessel is moving will reveal the relative motion of the ego vessel with respect to the background.

However, in the marine environment there are several radar targets that are likely to change their position over time, wherein one technical challenge is the presence of these potentially or actually dynamic objects. For example, a dock area will appear very different to a radar in presence or absence of containers, this may undermine a radar-based localization system. Alternatively or additionally, a passage of another vessel in proximity of the ego vessel may cause a radar-based odometry system to fail. Alternatively or additionally, the presence or absence of other vessels in a harbour may affect the radar measurements. Further, other entities may be considered as dynamic objects including, trucks and other vehicles, and/or containers.

The presence of these dynamic objects has the potential to degrade the performance of the above mentioned radar-based construction of a map, the radar-based localization of an ego vessel and the radar-based odometry with respect to the ego vessel. For example, a localization algorithm assuming that all of the surroundings are static will not be able to find the current position of the ego vessel accurately, if the surroundings have changed since the generation of the map used for the localization. For example, if a relatively large other vessel has left the dock since the radar measurement from which the map was constructed, it will be impossible to match the map with the current radar measurement. Similarly, an odometry algorithm that assumes that the radar returns are generated by a static background, will not be able to correctly determine the motion of the ego vessel, if one or more of the dynamic objects generate radar returns which are incompatible with the static background.

These considerations motivate the development of alternative odometry and/or positioning solutions that do not rely on GNSS or do not rely on external infrastructure at all.

### DESCRIPTION OF THE INVENTION

It is an objective of the present invention to provide a method for determining a motion of an ego vessel, which is very accurate and/or which may be carried out in a cost-efficient way, in particular automatically, and/or which does not rely on GNSS and/or which does not rely on external infrastructure at all.

It is another objective of the present invention to provide a system for determining the motion of the ego vessel, which is very accurate and/or which may be carried out in a cost-efficient way, in particular automatically, and/or which does not rely on GNSS and/or which does not rely on external infrastructure at all.

It is an objective of the present invention to provide a method for determining a map for maritime navigation, which contributes to that the map is very accurate and/or which may be carried out in a cost-efficient way, in particular automatically, and/or which does not rely on GNSS and/or which does not rely on external infrastructure at all.

These objectives are achieved by the subject-matter of the independent claims. Further exemplary embodiments are evident from the dependent claims and the following description.

An objective is achieved by a method for determining a motion of an ego vessel. The method comprising: receiving radar data of a radar measurement of surroundings of the ego vessel; receiving solid object data which are representative for one or more solid objects within the surroundings of the ego vessel; determining dynamic object data from the solid object data, wherein the dynamic object data are representative for one or more dynamic objects of the solid objects encoded in the solid object data; and determining the motion of the ego vessel depending on the radar data and the dynamic object data.

Determining the motion of the ego vessel depending on the radar data and the solid object data may enable to determine the motion of the ego vessel in a cost-efficient way and/or automatically, and/or without relying on GNSS and/or any other external infrastructure. Determining the motion of the ego vessel depending on the radar data and the dynamic object data may contribute to that the motion of the ego vessel may be determined very accurately. Determining the motion of the ego vessel depending on the radar data and the solid object data may belong to the field of odometry.

The radar data may be generated by a radar device and may be sent from the radar device to an entity carrying out the above method, wherein this entity may receive the radar data. The radar device may be arranged on the ego vessel. The entity may be a system for determining the motion of an ego vessel, e.g. as described below. The surroundings of the ego vessel may refer to an angular range around the ego vessel, wherein the angular range may be 360° or less and wherein an outreach of the surroundings may be limited by an outreach of the corresponding radar device. The solid object data may be generated by another device, e.g. a camera or an AIS-unit, as explained below, and may be sent from the other device to the entity carrying out the above method, wherein this entity may receive the solid object data. The solid objects may be one or more other vessels, land, e.g. a dock, a quay, and/or a coastline.

According to an embodiment, the solid object data are image data of one or more images captured by the camera arranged on the ego vessel, the one or more images show one or more solid objects, and the dynamic object data are determined from the solid object data by detecting those solid objects, which are moving, within the one or more images, by determining the moving solid objects as the dynamic objects, and by encoding these dynamic objects in the dynamic object data.

The image data may be generated by the camera and may be received by the entity carrying out the above method. The camera may be at least one of a group of cameras, the group comprising: a single or monocular camera, a pair of cameras or a stereo camera, a Time-Of-Flight camera, a gated camera, a Pan-Tilt-Zoom camera, and a structured light camera, wherein the cameras may be able to estimate a depth of the objects shown in the image relative to the camera, except for the single or monocular camera. The solid objects, which are moving, within the one or more images may be detected by object detection as it is known in the art. For example, the solid objects, which are moving, within the one or more images may be detected by semantic segmentation, object detection, instance segmentation, panoptic segmentation, of the image. This determination of the moving solid objects from one or more of the images may be carried out by a neural network which may have been trained to classify all moving objects within the image as dynamic objects. An exemplary approach for using semantic segmentation to determine which parts of an image are static and which are dynamic is described in "DS-SLAM: A Semantic Visual SLAM towards Dynamic", 2018 IEEE/RSJ International Conference on Intelligent Robots and Systems (IROS), Madrid, Spain, 2018, pp. 1168-1174, doi: 10.1109/IROS.2018.8593691. Alternatively, the solid objects, which are moving, may be detected by object detection carried out on two or more images subsequently captured, e.g., by the same camera, and by comparing the positions of the detected solid objects within the different images. Assuming that the ego vessel, in particular the camera, is not moving, if the positions of the detected solid objects have changed over the images, it is clear that the corresponding solid objects are moving and as such dynamic solid objects.

Further, when knowing which solid objects in the images are moving, in other words when knowing the dynamic solid objects in the images, positions of the moving solid objects relative to the ego vessel may be determined from the one or more images in order to identify those radar data which refer to the determined dynamic solid objects. For example, if a position and orientation of the camera on the ego vessel is known, e.g. in form of known calibration values of the camera, the relative position of the dynamic objects to the ego vessel may be derived from one or more of the images, e.g. as described in the unpublished patent application EP 22 180 131.9, page 22 ff, step S4 ff, and/or fig. 8 ff. When the relative positions of the dynamic solid objects to the ego vessel are known, the radar data referring to these dynamic objects may easily be determined, because the radar measurement by the radar device on the ego vessel also provides relative positions of the corresponding radar reflections and the radar data of radar reflections matching to the positions of the dynamic objects may be determined as the dynamic solid object data.

According to an embodiment, the one or more solid objects are correspondingly one or more of the other vessels, in particular the solid objects shown in the one or more images, and the one or more dynamic objects are one or more of the other vessels, wherein these latter other vessels are moving. The radar data which refer to the other vessels which are not moving may also be tagged, e.g. as "potentially" moving.

The dynamic object data may be a subset of data of the radar data. The dynamic objects may be encoded in the dynamic object data by tagging those data of the radar data which refer to the dynamic objects as the dynamic object data. Alternatively, the dynamic object data may be removed from the radar data such that the radar data are representative for none moving solid objects only. Alternatively, the dynamic object data may be extracted from the radar data. Then, the dynamic object data may be stored as a separate data file.

According to an embodiment, the one or more solid objects are correspondingly one or more other vessels, the solid object data are AIS data, and the dynamic object data are determined from the solid object data by identifying which of the other vessels encoded in the AIS data and being present in the surroundings of the ego vessel are moving, by determining the moving other vessels as the dynamic objects, and by encoding these dynamic objects in the dynamic object data.

The Automatic Identification System (AIS) data may be generated by the other vessels and/or may be broadcasted by the Vessel Traffic Service (VTS). The AIS data may comprise vessel-related information about one or more of the other vessels which are in the surroundings of the ego vessel, e.g. which are close to the ego vessel. In particular, the AIS data may relate to at least one other vessel in the same waterbody, wherein the other vessel may be one of the solid objects. The waterbody may be a lake, an ocean, a sea, or a river. The vessel-related information may comprise a unique identifier, a geo-position, a course over ground, and a speed over ground of the other vessel. Further, the AIS data may comprise an extent of the other vessel in relation to a geo-location of its GPS receiver. This enables to take the extent of the other vessel in relation to the geo-location of its GPS receiver into account when determining the dynamic object data. So, it may be derived from the AIS data which other vessels around the ego vessel are moving and where these moving other vessels are. The positions of these dynamic solid objects, i.e. moving other vessels, may be matched to the radar data such that those radar data which refer to the dynamic solid objects may be recognized as such and may be considered when determining the motion of the ego vessel.

According to an embodiment, the motion of the ego vessel refers to a motion of the ego vessel over ground. In this case, the motion of the ego vessel may be referred to as absolute motion of the ego vessel.

According to an embodiment, the determining of the motion, in particular the absolute motion, of the ego vessel depending on the radar data and the dynamic object data comprises determining those data from the radar data which correspond to the dynamic object data and determining the motion of the ego vessel depending on the radar data except for the dynamic object data. For example, the dynamic object data may be removed from the radar data and the motion of the ego vessel may be determined depending on the remaining radar data. Vividly spoken, the dynamic objects may be removed from the radar measurement, in particular from the radar data, such that the radar data may only refer to stationary solid objects in the surroundings of the ego vessel. Alternatively, the dynamic object data may remain in the radar data, may be tagged as dynamic object data, and, when determining the motion of the ego vessel, the dynamic object data may not be considered and/or may be ignored. So, the (absolute) motion of the ego vessel may be determined with respect to not moving objects in the surroundings of the ego vessel only, e.g. as it is known in the field of odometry, e.g. as described in the above cited references of H. Schiller, S. H. Cen, and/or C. Doer. This contributes to that the motion of the ego vessel may be determined very accurately.

According to an embodiment, the radar data refer to an angular range around the ego vessel, a circular sector of the angular range, in which the corresponding dynamic object is arranged, is determined, and those data from the radar data are determined as the dynamic object data which refer to the determined circular sector. The angular range may be 360° around the ego vessel or less. The circular sector may be determined from the AIS data or from the image data. Thus, all of the radar data which refer to the circular sector in which the corresponding dynamic object is present may be determined as the dynamic object data. So, radar data which refer to any objects between the corresponding dynamic object and the ego vessel may also be determined as the dynamic object data, independent thereof whether these objects are moving or not. Then, the dynamic object data may be tagged as such in the radar data or may be removed from the radar data. In any case, the motion, in particular the absolute motion, of the ego vessel may be determined from the radar data except for the dynamic object data.

According to an embodiment, the radar data refer to the angular range around the ego vessel, and the method further comprises: determining distance data which are representative for a distance between the ego vessel and one of the dynamic objects; and determining from the distance data a circular segment, in which the corresponding dynamic object is arranged, within the angular range, wherein those data from the radar data are determined as the dynamic object data which refer to the circular segment. The circular segment may be additionally determined from the AIS data or from the image data. The distance data may be determined from the AIS data or from the image data. For example, there are cameras and/or camera systems known which provide a depth information of the objects captured by the corresponding cameras. In this context, the depth may correspond to the distance from the camera to the corresponding solid object. Then, only the radar data which refer to the circular segment in which the corresponding dynamic object is present may be determined as the dynamic object data. So, radar data which refer to any none moving objects between the corresponding dynamic object and the ego vessel may not be determined as the dynamic object data. Then, the dynamic object data may be tagged as such in the radar data or may be removed from the radar data. In any case, the motion, in particular the absolute motion, of the ego vessel may be determined from the radar data except for the dynamic object data.

According to an embodiment, the method comprises: determining a position of at least one of the dynamic objects relative to the ego vessel; and determining an extension of the corresponding dynamic object, wherein those data from the radar data, which refer to the position and extension of the corresponding dynamic object, are considered as the dynamic object data. This contributes to that the dynamic object data may be determined very accurately and thereby that the motion, in particular the absolute motion, of the ego vessel may be determined very accurately. The position and/or extension of the dynamic object may be determined from the AIS data or from the image data.

According to an embodiment, the motion of the ego vessel refers to a motion of the ego vessel relative to one of the dynamic objects. In this case, the motion of the ego vessel may be referred to as relative movement of the ego vessel.

According to an embodiment, the determining of the motion, in particular the relative motion, of the ego vessel depending on the radar data and the dynamic object data comprises determining all data from the radar data which do not correspond to the dynamic object data of the corresponding dynamic object and determining the motion of the ego vessel depending on the dynamic object data only. For example, all radar data except for the dynamic object data may be removed from the radar data. Vividly spoken, all data except for those of the corresponding dynamic object may be removed from the radar measurement, in particular from the radar data, such that the radar data may only refer to the corresponding dynamic object. Alternatively, all of radar data may remain in the radar data and the dynamic object data may be tagged as dynamic object data in the radar data. Alternatively, the dynamic object data may be extracted from the radar data and may be stored as a separate data file. In any case, when determining the motion, in particular the relative motion, of the ego vessel, the dynamic object data may be considered only. The remaining radar data referring to none moving solid objects only may not be considered for determining the relative motion of the ego vessel to another vessel.

According to an embodiment, the radar data refer to the angular range around the ego vessel, the circular sector of the angular range, in which the corresponding dynamic object is arranged, is determined, and only those data from the radar data which refer to the determined circular sector are considered as the dynamic object data. The circular sector may be determined from the AIS data or from the image data. Thus, all of the radar data which refer to the circular sector in which the corresponding dynamic object is present may be determined as the dynamic object data. So, radar data which refer to any objects between the corresponding dynamic object and the ego vessel may also be determined as the dynamic object data, independent thereof whether these objects are moving or not. Then, the dynamic object data may be tagged as such in the radar data, all other data except for the dynamic object data may be removed from the radar data, or the dynamic object data may be extracted from the radar data. In any case, the motion, in particular the relative motion, of the ego vessel may be determined from the dynamic object data only.

According to an embodiment, the radar data refer to the angular range around the ego vessel, and the method comprises: determining the distance data which are representative for the distance between the ego vessel and one of the dynamic objects; and determining from the distance data the circular segment, in which the corresponding dynamic object is arranged, within the angular range, wherein only those data from the radar data which refer to the determined circular segment are considered as the dynamic object data. The circular segment may be additionally determined from the AIS data or from the image data. The distance data may be determined from the AIS data or from the image data. Thus, only the radar data which refer to the circular segment in which the corresponding dynamic object is present may be determined as the dynamic object data. So, radar data which refer to any none moving objects between the corresponding dynamic object and the ego vessel may not be determined as the dynamic object data. Then, the dynamic object data may be tagged as such in the radar data, all other data except for the dynamic object data may be removed from the radar data, or the dynamic object data may be extracted from the radar data. In any case, the motion, in particular the relative motion, of the ego vessel may be determined from the dynamic object data only.

According to an embodiment, the method comprises: determining the position of at least one of the dynamic objects relative to the ego vessel; and determining the extension of the corresponding dynamic object, wherein only those data from the radar data which refer to the position and extension of the corresponding dynamic object are considered as the dynamic object data. This contributes to that the dynamic object data may be determined very accurately and thereby that the motion, e.g. the relative motion, of the ego vessel may be determined very accurately. The position and/or extension of the dynamic object may be determined from the AIS data or from the image data.

An objective is achieved by the system for determining the motion of the ego vessel. The system comprises the memory configured for saving the radar data, the image data, the solid object data, and/or the dynamic object data, and a processor configured for carrying out the above and/or the below method. Further, the system may comprise the camera or may be a part of the camera. It has to be understood that features of the method for determining the motion of the ego vessel, as described in the above and in the following, may be features of the system for determining the motion of the ego vessel, as described in the above and in the following.

An objective is achieved by a method for determining a map for maritime navigation. This method may be regarded as a second aspect of the present invention. The method comprises: receiving the radar data of the radar measurement of the surroundings of the ego vessel; receiving the image data of one or more of the images captured by the camera arranged on the ego vessel, wherein the one or more images show the one or more solid objects in the surroundings of the ego vessel; determining the dynamic object data from the image data, wherein the dynamic object data are representative for one or more of the dynamic objects of the solid objects shown in the image; and determining the map depending on the radar data and the dynamic object data. It has to be understood that features of the method and/or system for determining the motion of the ego vessel, as described in the above and in the following, may be features of the method for determining the map for maritime navigation, as described in the above and in the following.

According to an embodiment of the second aspect, the dynamic object data are determined from the image data by detecting those solid objects within the one or more images which are moving, by determining the moving solid objects as the dynamic objects, and by encoding these dynamic objects in the dynamic object data.

According to an embodiment of the second aspect, the one or more solid objects are correspondingly one or more other vessels, and the one or more dynamic objects are one or more of the other vessels, wherein these other vessels are moving.

According to an embodiment of the second aspect, the determining of the map depending on the radar data and the dynamic object data may comprise determining those data from the radar data which correspond to the dynamic object data and by determining the map depending on the radar data except for the dynamic object data. For example, those data which refer to the dynamic objects may be removed from the radar measurement, in particular from the radar data, such that the radar data may only refer to stationary solid objects in the surroundings of the ego vessel. Alternatively, those data which refer to the dynamic objects, i.e. the dynamic object data, may be tagged as such in the radar data and the map may be generated depending on the remaining none-tagged radar data only, e.g. as described in US 95 81 695 B2 mentioned above. Optionally, radar data which refer to solid objects which are currently not moving, but which are able to move or for being moved, e.g. another vessel or a container at a dock, may be tagged as "potentially" moving in the radar data. Then, the radar data being tagged as referring to potentially moving solid objects may be excluded when generating the map, or may be considered as potentially moved since the last radar measurement when localizing the ego vessel with the help of the corresponding map.

According to an embodiment of the second aspect, the radar data refer to the angular range around the ego vessel, the circular sector of the angular range, in which the corresponding dynamic object is arranged, is determined, and those data from the radar data, which refer to the circular sector, are determined as the dynamic object data.

According to an embodiment of the second aspect, the radar data refer to the angular range around the ego vessel and the method comprises determining the distance data which are representative for a distance between the ego vessel and one of the dynamic objects; and determining from the distance data the circular segment, in which the corresponding dynamic object is arranged, within the angular range, wherein those data from the radar data which refer to the circular segment are considered as the dynamic object data. The circular segment may be additionally determined from the image data or from the AIS data. The distance data may be determined from the image data or from the AIS data.

According to an embodiment of the second aspect, the method comprises determining the position of at least one of the dynamic objects relative to the ego vessel; and determining the extension of the corresponding dynamic object, wherein those data from the radar data, which refer to the position and extension of the corresponding dynamic object, are considered as the dynamic object data.

These and other aspects of the invention will be apparent from and elucidated with reference to the embodiments described hereinafter.

### BRIEF DESCRIPTION OF THE DRAWINGS

The subject matter of the invention will be explained in more detail in the following text with reference to exemplary embodiments which are illustrated in the attached drawings.
Fig. 1 shows an example of a map for maritime navigation;
Fig. 2 shows an example of an image showing surroundings of an ego vessel;
Fig. 3 shows a flowchart of an exemplary embodiment of a method for determining a motion of the ego vessel;
Fig. 4 shows a flowchart of an exemplary embodiment of a method for determining dynamic object data from solid object data;
Fig. 5 shows a flowchart of an exemplary embodiment of a method for determining dynamic object data from solid object data; and
Fig. 6 shows a flowchart of an exemplary embodiment of a method for determining a map for maritime navigation.

The reference symbols used in the drawings, and their meanings, are listed in summary form in the list of reference symbols. In principle, identical parts are provided with the same reference symbols in the figures.

### DETAILED DESCRIPTION OF EXEMPLARY EMBODIMENTS

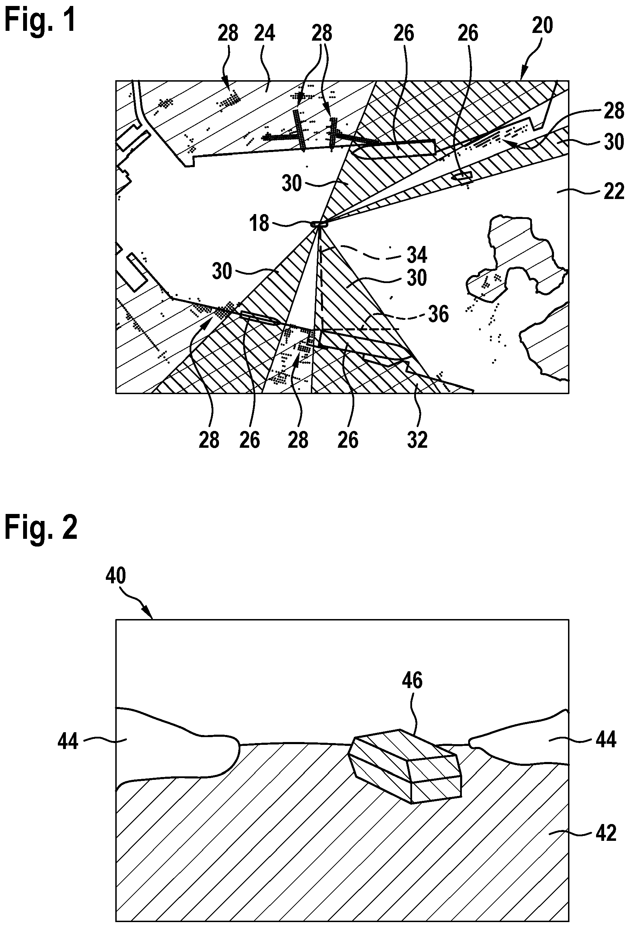

**Fig. 1** shows an example of a map 20 for maritime navigation. The map 20 shows an ego vessel 18 on a water surface 22 of a waterbody, land 24 and several other vessels 26 in the surroundings of the ego vessel 18. In particular, figure 1 shows positions and extensions, in particular lengths and widths, of the ego vessel 18 and the other vessels 26. The waterbody may be a lake, an ocean, a sea, or a river. The land 24 may comprise a quay, a dock, a harbour, one or more islands and/or any other part of mainland.

Further, figure 1 shows several circular sectors 30 of an angular range surrounding the ego vessel 18. The angular range may be 360° in this example. Each of the circular sectors 30 comprises one of the other vessels 26. In fact, the circular sectors 30 are chosen such that for every other vessel 26 in the surroundings of the ego vessel 18 one of the circular sectors 30 is determined such that the corresponding other vessel 26 is within the corresponding circular sector 30, e.g. completely and/or exactly.

A distance 34 extends from the ego vessel 18 to one of the other vessels 26 and is shown in figure 1 by the dashed line. Another line 36, in particular the dotted line of figure 1, is perpendicular to the distance 34 and/or to a radius of the angular range around the ego vessel 18. The line 36 separates a circular segment 32 from the rest of the corresponding circular sector 30. The line 36 and the corresponding circular segment 32 are defined such that the other vessel 26 within the corresponding circular sector 30 is within the circular segment 32. A corresponding distance, line, and/or circular segment may be constructed for each of the other circular sectors 30 and corresponding other vessels 26.

Figure 1 further shows several radar reflections 28 from a radar measurement. The radar reflections 28 are present all over the angular range around the ego vessel 18 except for the circular sectors 30 and the circular segment 32. The radar measurement may be carried out by a radar system arranged on the ego vessel 18.

**Fig. 2** shows an example of an image 40 showing at least a part of the surroundings of the ego vessel 18. The image 40 may show at least one imaged solid object. For example, the imaged solid object may be an imaged other vessel 46 or an imaged land 44. In particular, the image 40 may show the imaged other vessel 46, which may be seen from the ego vessel 18, which may also sail on the waterbody, and which may correspond to one of the other vessels 26 shown in figure 1. In addition, the image 40 may further show the imaged land 44, e.g. two imaged spits of land, which may correspond to a part of the land 24 shown in figure 1. Further, the waterbody may be represented within the image 40 by an imaged water surface 42 of the waterbody which corresponds to the water surface 22 of the waterbody in the real world.

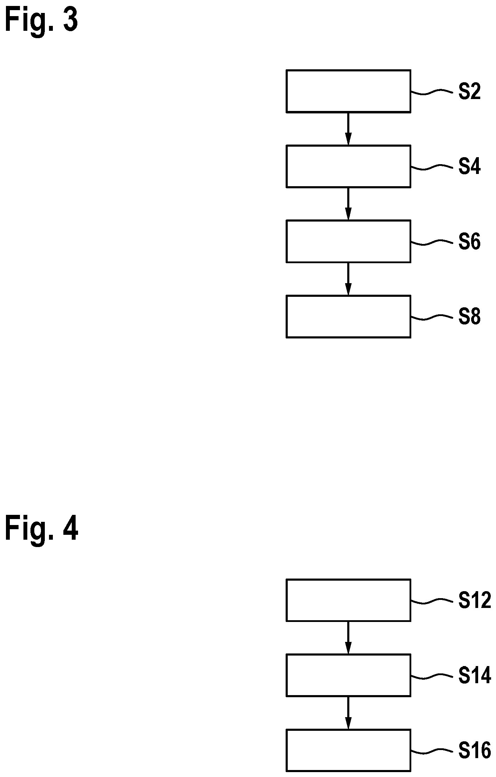

The imaged water surface 42 is marked by a hatching with several dashed lines. The imaged other vessel 46 is marked by a hatching with several dotted lines. The marking of the imaged water surface 42 and the imaged other vessel 46 may correspond to a visualization of an output of an algorithm for determining water surfaces and vessels in images. The algorithm may constitute a neural network. The neural network may be trained in advance to be able to detect water surfaces and vessels in images, as it is known in the art of object detection. The training may be carried out by an amount of labelled images showing water surfaces and vessels. The marking of the image 40 may be generated by semantic segmentation, object detection, instance segmentation, or panoptic segmentation of the image 40 based on the corresponding image data, as explained below with respect to figure 3.

**Fig. 3** shows a flowchart of an exemplary embodiment of a method for determining a motion of the ego vessel 18. The method may be carried out by a system for determining the motion of the ego vessel 18, e.g. as described below. The system may be arranged at least in part on the ego vessel 18.

In a step S2, radar data of a radar measurement of the surroundings of the ego vessel 18 may be received. The radar data may be generated by a radar device of the ego vessel 18 and may be sent from the radar device to system for determining the motion of the ego vessel 18, wherein the system may receive the radar data. The surroundings of the ego vessel 18 may refer to the angular range around the ego vessel 18, e.g. as shown in figure 1, wherein the angular range may be 360° or less and wherein an outreach of the surroundings may be limited by an outreach of the corresponding radar device. The radar data are representative for the radar reflections 28 and thereby for the solid objects in the surroundings of the ego vessel 18, and in particular for the relative positions of these solid objects relative to the ego vessel 18. In particular, the radar data may be representative for directions from which the radar reflections are received with respect to the ego vessel 18 and for distances from the corresponding radar reflections to the ego vessel 18. For example, the radar data comprise coordinates of the radar reflections in a vessel-coordinate-system of the ego vessel 18.

In a step S4, solid object data which are representative for one or more of the solid objects within the surroundings of the ego vessel 18 may be received. The solid object data may be generated by another device, e.g. a camera (not shown) or an AIS-unit (not shown), as explained below, and may be sent from the other device to the system, wherein the system may receive the solid object data. The solid objects may be one or more other vessels 26, the land 24, e.g. a dock, a quay, and/or a coastline.

The camera 24 may be configured for capturing one or more of the images 40 of surroundings of the ego vessel 70 and for generating the corresponding image data. For example, the camera 24 may be configured for generating a video stream comprising several subsequent images 40 of the surroundings of the ego vessel 18. The corresponding image data may be generated by the camera and may be received by the system. The camera may be at least one of a group of cameras, the group comprising: a single or monocular camera, a pair of cameras or a stereo camera, a Time-Of-Flight camera, a gated camera, a Pan-Tilt-Zoom camera, and a structured light camera, wherein the cameras may be able to estimate a depth of the objects shown in the image relative to the camera, except for the single or monocular camera.

In a step S6, dynamic object data may be determined from the solid object data, wherein the dynamic object data may be representative for one or more dynamic objects of the solid objects encoded in the solid object data. For example, the one or more solid objects are correspondingly one or more of the other vessels 26. In this case, the one or more dynamic objects may be one or more of the other vessels 26, wherein these other vessels 26 are moving.

In one embodiment, the solid object data may be the image data of one or more of the images 40 captured by the camera arranged on the ego vessel 18, wherein the one or more images 40 show one or more of the solid objects, e.g. the imaged other vessel 46, and the dynamic object data may be determined in accordance with the method explained below with respect to figure 4.

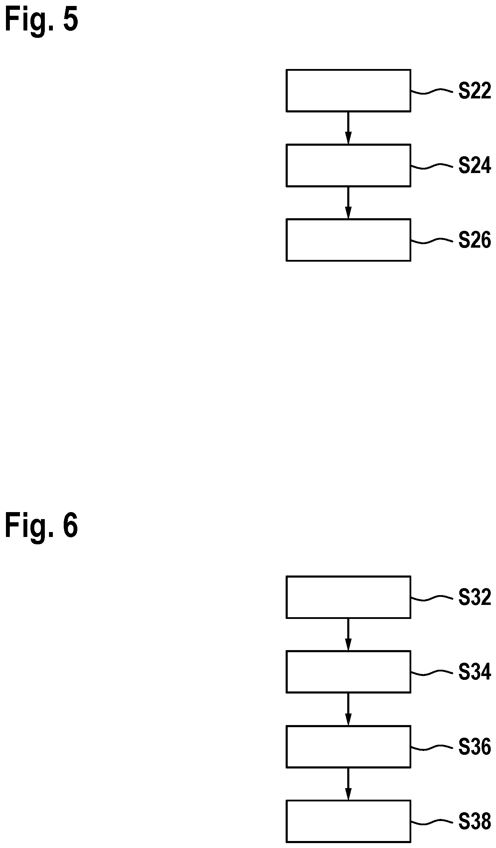

In another embodiment, the one or more of the solid objects may be correspondingly one or more of the other vessels 26, the solid object data may be Automatic Identification System (AIS) data, and the dynamic object data may be determined from the solid object data by the method explained below with respect to figure 5. The AIS data may be generated by the other vessels 26 and/or may be broadcasted by the Vessel Traffic Service (VTS). The AIS data may comprise vessel-related information about one or more of the other vessels 26 which are in the surroundings of the ego vessel 18, e.g. which are close to the ego vessel 18. In particular, the AIS data may relate to at least one of the other vessels 26 in the same waterbody, wherein this other vessel 26 may be one of the solid objects. The vessel-related information may comprise a unique identifier, a geo-position, a course over ground, and a speed over ground of the corresponding other vessel 26. Further, the AIS data may comprise an extent of the corresponding other vessel 26 in relation to a geo-location of its GPS receiver. This enables to take the extent of the corresponding other vessel 26 in relation to the geo-location of its GPS receiver into account when determining the dynamic object data.

In a further other embodiment, the approaches of the latter two embodiments, i.e. using the image data as the solid object data and using the AIS data as the solid object data, may be combined, e.g. to verify each other and/or to provide more details about the corresponding dynamic objects.

In a step S8, the motion of the ego vessel 18 may be determined depending on the radar data and the dynamic object data. The dynamic object data may be a subset of data of the radar data. When it comes to the determining of the motion of the ego vessel 18, it has to be differentiated between determining the motion of the ego vessel 18 over ground, i.e. the absolute motion, and determining the motion of the ego vessel 18 with respect to one of the other vessels 26, as explained in the following.

### Absolute Motion

In general, a common approach to estimate the motion of the moving ego vessel 18 may roughly described in three steps: 1) estimation of landmarks or other keypoints from at least two radar measurements; 2) matching or associating these landmarks between the two radar measurements; 3) estimating the motion from the matched landmarks, as for example described in "Improving Marine Radar Odometry by Modeling Radar Resolution and Exploiting Additional Temporal Information", C. H. Schiller, B. Arsenali, D. Maas and S. Maranó, 2022 IEEE/RSJ International Conference on Intelligent Robots and Systems (IROS), Kyoto, Japan, 2022, pp. 8436-8441, doi: 10.1109/IROS47612.2022.9981293, or as described in "Precise Ego-Motion Estimation with Millimeter-Wave Radar Under Diverse and Challenging Conditions" Cen and P. Newman, 2018 IEEE International Conference on Robotics and Automation (ICRA), Brisbane, QLD, Australia, 2018, pp. 6045-6052, doi: 10.1109/ICRA.2018.8460687

The motion of the ego vessel may refer to the motion of the ego vessel 18 over ground. In this case, the motion of the ego vessel 18 may be referred to as absolute motion of the ego vessel 18. The determining of the absolute motion of the ego vessel 18 depending on the radar data and the dynamic object data may comprise determining those data from the radar data which correspond to the dynamic object data and determining the motion of the ego vessel depending on the radar data except for the dynamic object data. For example, the dynamic object data may be removed from the radar data and the motion of the ego vessel may be determined depending on the remaining radar data. Vividly spoken, the dynamic objects may be removed from the radar measurement, in particular from the radar data, such that the radar data may only refer to stationary solid objects in the surroundings of the ego vessel 18, e.g. as it is visualized in figure 1 which does not show any radar reflections 28 within the circular sectors 30 comprising the moving other vessels 26. Alternatively, the dynamic object data may remain in the radar data, may be tagged as dynamic object data, and, when determining the absolute motion of the ego vessel 18, the dynamic object data may not be considered and/or may be ignored. So, the absolute motion of the ego vessel 18 may be determined with respect to none moving objects in the surroundings of the ego vessel 18 only, e.g. as it is known in the art of odometry.

For example, if the relative position of the ego vessel 18 to at least two none moving solid objects in the surroundings of the ego vessel 18 is determined at consecutive time steps, changes in the corresponding relative positions are representative for the absolute motion of the ego vessel. These relative positions may be derived from the image data and/or from the AIS data. In case of the image data, the relative position of the solid objects to the ego vessel 18 may be derived from one or more of the images 40 as described in the unpublished patent application EP 22 180 131.9, page 22 ff, step S4 ff, and/or fig. 8 ff, for example.

The radar data may refer to the angular range around the ego vessel 18. The circular sectors 30 of the angular range, in which the corresponding dynamic objects are arranged, may be determined, and those data from the radar data may be determined as the dynamic object data which refer to the determined circular sector 30. The angular range may be 360° around the ego vessel or less. The circular sector 30 may be determined from the AIS data or from the image data. Thus, all of the radar data which refer to the circular sectors 30 in which the corresponding dynamic objects are present may be determined as the dynamic object data. So, radar data which refer to any objects between the corresponding dynamic objects and the ego vessel 18 may also be determined as the dynamic object data, independent thereof whether these objects are moving or not. Then, the dynamic object data may be tagged as such in the radar data or may be removed from the radar data, as explained above. In any case, the absolute motion of the ego vessel 18 may be determined from the radar data except for the dynamic object data.

Alternatively, distance data which are representative for the distance 34 between the ego vessel 18 and one of the dynamic objects, e.g. one of the other vessels 26, may be determined, and the circular segment 32, in which the corresponding dynamic object is arranged, within the angular range may be determined from the distance data. Then, those data from the radar data may be determined as the dynamic object data which refer to the corresponding circular segment 32. The circular segment 32 may be determined from the AIS data or from the image data. The distance data may be determined from the AIS data or from the image data. Thus, only the radar data which refer to the circular segment 32 in which the corresponding dynamic object is present may be determined as the dynamic object data. So, radar data which refer to any none moving objects between the corresponding dynamic object and the ego vessel may not be determined as the dynamic object data. Then, the dynamic object data may be tagged as such in the radar data or may be removed from the radar data. In any case, the absolute motion of the ego vessel 18 may be determined from the radar data except for the dynamic object data.

Alternatively, a position of at least one of the dynamic objects relative to the ego vessel 18 and an extension of the corresponding dynamic object may be determined, wherein those data from the radar data, which refer to the position and extension of the corresponding dynamic object, may be considered as the dynamic object data. The position and/or extension of the dynamic object may be determined from the AIS data or from the image data. Then, the dynamic object data may be tagged as such in the radar data or may be removed from the radar data. In any case, the absolute motion of the ego vessel 18 may be determined from the radar data except for the dynamic object data.

### Relative Motion

The motion of the ego vessel 18 may refer to the motion of the ego vessel 18 relative to one of the dynamic objects, e.g. relative to one of the other vessels 26. In this case, the motion of the ego vessel 18 may be referred to as relative motion of the ego vessel 18.

The determining of the relative motion of the ego vessel 18 depending on the radar data and the dynamic object data may comprise determining all data from the radar data which do not correspond to the dynamic object data of the corresponding dynamic object and determining the motion of the ego vessel 18 depending on the dynamic object data only. For example, all radar data except for the dynamic object data may be removed from the radar data. Vividly spoken, all data except for those of the corresponding dynamic object may be removed from the radar measurement, in particular from the radar data, such that the radar data may only refer to the corresponding dynamic object. Alternatively, all of radar data may remain in the radar data and the dynamic object data may be tagged as dynamic object data in the radar data. Alternatively, the dynamic object data may be extracted from the radar data and may be stored as a separate data file. In any case, when determining the relative motion of the ego vessel, the dynamic object data may be considered only.

For example, if the relative position of the ego vessel 18 to the dynamic object is determined at consecutive time steps, changes in the corresponding relative positions are representative for the relative motion of the ego vessel 18 to the corresponding dynamic object. These relative positions may be derived from the image data and/or from the AIS data. In case of the image data, the relative position of the solid objects to the ego vessel 18 may be derived from one or more of the images 40 as described in the unpublished patent application EP 22 180 131.9, page 22 ff, step S4 ff, and/or fig. 8 ff, for example.

The radar data may refer to the angular range around the ego vessel 18, the circular sector 30 of the angular range, in which the corresponding dynamic object is arranged, may be determined, and only those data from the radar data which refer to the determined circular sector 30 may be considered as the dynamic object data. The circular sector 30 may be determined from the AIS data or from the image data. Thus, all of the radar data which refer to the circular sector 30 in which the corresponding dynamic object is present may be determined as the dynamic object data. So, radar data which refer to any solid objects between the corresponding dynamic object and the ego vessel 18 may also be determined as the dynamic object data, independent thereof whether these solid objects are moving or not. Then, the dynamic object data may be tagged as such in the radar data, all other data except for the dynamic object data may be removed from the radar data, or the dynamic object data may be extracted from the radar data. In any case, the relative motion of the ego vessel 18 may be determined from the dynamic object data only.

Alternatively, the distance data which are representative for the distance 34 between the ego vessel 18 and one of the dynamic objects may be determined and the circular segment 32, in which the corresponding dynamic object is arranged, within the angular range may be determined from the distance data. Then, only those data from the radar data which refer to the determined circular segment 32 may be considered as the dynamic object data. The circular segment 32 may be determined from the AIS data or from the image data. The distance data may be determined from the AIS data or from the image data. Thus, only the radar data which refer to the circular segment 32 in which the corresponding dynamic object is present may be determined as the dynamic object data. So, radar data which refer to any none moving objects between the corresponding dynamic object and the ego vessel may not be determined as the dynamic object data. Then, the dynamic object data may be tagged as such in the radar data, all other data except for the dynamic object data may be removed from the radar data, or the dynamic object data may be extracted from the radar data. In any case, the relative motion of the ego vessel 18 may be determined from the dynamic object data only.

Alternatively, the position of at least one of the dynamic objects relative to the ego vessel 18 and the extension of the corresponding dynamic object may be determined. Then, only those data from the radar data which refer to the position and extension of the corresponding dynamic object are considered as the dynamic object data. The position and/or extension of the dynamic object may be determined from the AIS data or from the image data. The determined dynamic objects may be encoded in the dynamic object data by tagging those data of the radar data which refer to the dynamic objects as the dynamic object data. Alternatively, the dynamic object data may be extracted from the radar data and may be stored as a separate data file. Alternatively, all other data except for the dynamic object data may be removed from the radar data such that the radar data are representative for the dynamic object data only. In any case, the relative motion of the ego vessel 18 may be determined from the dynamic object data only.

**Fig. 4** shows a flowchart of an exemplary embodiment of a method for determining dynamic object data from solid object data. This method may be carried out when carrying out step S6 of the method explained above with respect to figure 3.

In a step S12, the dynamic object data may be determined from the solid object data by detecting those solid objects, which are moving, within the one or more of the images 40, The solid objects, which are moving, within the one or more of the images 40 may be detected as it is known in the art. For example, the solid objects, which are moving, within the one or more of the images 40 may be detected by semantic segmentation, object detection, instance segmentation, panoptic segmentation, of the image 40 by a correspondingly trained neural network. For example, when using a known object detection algorithm, the corresponding algorithm may provide information about the detected objects and/or the class to which the corresponding objects belong. The classes which may be recognized by the algorithm may comprise vessel, truck, and/or container. The neural network may have been trained to classify all moving objects within the image 40 as the dynamic objects. An exemplary approach for using semantic segmentation to determine which parts of an image are static and which are dynamic is described in "DS-SLAM: A Semantic Visual SLAM towards Dynamic", 2018 IEEE/RSJ International Conference on Intelligent Robots and Systems (IROS), Madrid, Spain, 2018, pp. 1168-1174, doi: 10.1109/IROS.2018.8593691.

Alternatively, the solid objects, which are moving, within the one or more of the images 40 may be detected by comparing two or more of the images 40 subsequently captured, e.g., by the same camera, and by comparing positions of the corresponding solid objects within the different images 40.

In a step S14, the moving solid objects may be determined, e.g. identified, as the dynamic objects.

In a step S16, these dynamic objects may be encoded in the dynamic object data, e.g. as explained above.

**Fig. 5** shows a flowchart of an exemplary embodiment of a method for determining dynamic object data from solid object data. This method may be carried out when carrying out step S6 of the method explained above with respect to figure 3.

In a step S22, the dynamic object data are determined from the solid object data by identifying which of the other vessels encoded in the AIS data and being present in the surroundings of the ego vessel are moving. This identification may be easily carried out from the AIS data, because the AIS data directly provide the geo-position, the course over ground, and the speed over ground of the corresponding other vessel 26

In a step S24, the moving other vessels 26 may be determined as the dynamic objects.

In a step S26, these dynamic objects may be encoded in the dynamic object data.

**Fig. 6** shows a flowchart of an exemplary embodiment of a method for determining a map for maritime navigation, e.g. the map 20 of figure 1.

In a step S32, the radar data of the radar measurement of the surroundings of the ego vessel 18 are received, e.g. as described with respect to step S2 above.

In a step S34, the image data of one or more of the images 40 captured by the camera arranged on the ego vessel 18 may be received, wherein the one or more images 40 show the one or more solid objects in the surroundings of the ego vessel 18, e.g. as described above with respect to steps S4 and S6. The one or more solid objects may be correspondingly one or more of the other vessels 26.

In a step S36, the dynamic object data may be determined from the image data, wherein the dynamic object data are representative for one or more of the dynamic objects of the solid objects shown in the image 40, e.g. as described above with respect to step S6. The one or more dynamic objects may be one or more of the other vessels 26, wherein these other vessels 26 are moving. The dynamic object data may be determined from the image data by detecting those solid objects within the one or more images 40 which are moving, by determining the moving solid objects as the dynamic objects, and by encoding these dynamic objects in the dynamic object data.

Optionally, the radar data which refer to one or more of the other vessels 26 which are not moving may also be tagged, e.g. as "potentially" moving.

In a step S38 the map 20 may be determined depending on the radar data and the dynamic object data. For example, those radar data which refer to the dynamic object data may be identified and the map 20 may be generated based on the radar data which do not refer to the dynamic object data, e.g. as it is described in US 95 81 695 B2.

The neural networks and components mentioned above, each may be implemented by software, hardware, or a combination of software and hardware.

While the invention has been illustrated and described in detail in the drawings and foregoing description, such illustration and description are to be considered illustrative or exemplary and not restrictive; the invention is not limited to the disclosed embodiments. Other variations to the disclosed embodiments can be understood and effected by those skilled in the art and practising the claimed invention, from a study of the drawings, the disclosure, and the appended claims. In the claims, the word "comprising" does not exclude other elements or steps, and the indefinite article "a" or "an" does not exclude a plurality. A single processing unit or other unit may fulfil the functions of several items recited in the claims. The mere fact that certain measures are recited in mutually different dependent claims does not indicate that a combination of these measures cannot be used to advantage. Any reference signs in the claims should not be construed as limiting the scope.

### LIST OF REFERENCE SYMBOLS

- 18: ego vessel
- 20: map
- 22: water surface
- 24: land
- 26: other vessel
- 28: radar reflections
- 30: circular sector
- 32: circular segment
- 34: distance
- 36: line
- 40: image
- 42: imaged water surface
- 44: imaged land
- 46: imaged other vessel
- S2-S14: steps one to thirty-eight

## Claims

1. Method for determining a motion of an ego vessel (18), comprising:
receiving radar data of a radar measurement of surroundings of the ego vessel (18);
receiving solid object data which are representative for one or more solid objects within the surroundings of the ego vessel (18);
determining dynamic object data from the solid object data, wherein the dynamic object data are representative for one or more dynamic objects of the solid objects encoded in the solid object data; and
determining the motion of the ego vessel (18) depending on the radar data and the dynamic object data.

2. Method in accordance with claim 1, wherein
the solid object data are image data of one or more images (40) captured by a camera arranged on the ego vessel (18),
the one or more images (40) show one or more solid objects,
the dynamic object data are determined from the solid object data by detecting those solid objects, which are moving, within the one or more images (40), by determining the moving solid objects as the dynamic objects, and by encoding these dynamic objects in the dynamic object data.

3. Method in accordance with claim 2, wherein
the one or more solid objects are correspondingly one or more other vessels (26), and
the one or more dynamic objects are one or more of the other vessels (26), wherein these other vessels (26) are moving.

4. Method in accordance with claim 1, wherein
the one or more solid objects are correspondingly one or more other vessels (26),
the solid object data are AIS data; and
the dynamic object data are determined from the solid object data by identifying which of the other vessels (26) encoded in the AIS data are moving, by determining the moving other vessels (26) as the dynamic objects, and by encoding these dynamic objects in the dynamic object data.

5. Method in accordance with one of the preceding claims, wherein
the motion of the ego vessel (18) refers to a motion of the ego vessel (18) over ground.

6. Method in accordance with claim 5, wherein
the determining of the motion of the ego vessel (18) depending on the radar data and the dynamic object data comprises determining those data from the radar data which correspond to the dynamic object data and determining the motion of the ego vessel (18) depending on the radar data except for the dynamic object data.

7. Method in accordance with claim 6, wherein
the radar data refer to an angular range around the ego vessel (18),
a circular sector (30) of the angular range, in which the corresponding dynamic object is arranged, is determined, and
those data from the radar data are determined as the dynamic object data which refer to the determined circular sector (30).

8. Method in accordance with claim 6, wherein the radar data refer to an angular range around the ego vessel (18), the method comprising:
determining distance data which are representative for a distance (34) between the ego vessel (18) and one of the dynamic objects; and
determining from the distance data a circular segment (32), in which the corresponding dynamic object is arranged, within the angular range,
wherein those data from the radar data are determined as the dynamic object data which refer to the circular segment (32).

9. Method in accordance with claim 6, comprising:
determining a position of at least one of the dynamic objects relative to the ego vessel (18); and
determining an extension of the corresponding dynamic object,
wherein those data from the radar data, which refer to the position and extension of the corresponding dynamic object, are considered as the dynamic object data.

10. Method in accordance with one of claims 1 to 4, wherein
the motion of the ego vessel (18) refers to a motion of the ego vessel (18) relative to one of the dynamic objects.

11. Method in accordance with claim 10, wherein
the determining of the motion of the ego vessel (18) depending on the radar data and the dynamic object data comprises determining all data from the radar data which do not correspond to the dynamic object data of the corresponding dynamic object and determining the motion of the ego vessel (18) depending on the dynamic object data only.

12. Method in accordance with claim 11, wherein
the radar data refer to an angular range around the ego vessel (18),
a circular sector (30) of the angular range, in which the corresponding dynamic object is arranged, is determined, and
only those data from the radar data which refer to the determined circular sector (30) are considered as the dynamic object data.

13. Method in accordance with claim 11, wherein the radar data refer to an angular range around the ego vessel (18), the method comprising:
determining distance (34) data which are representative for a distance (34) between the ego vessel (18) and one of the dynamic objects; and
determining from the distance (34) data a circular segment (32), in which the corresponding dynamic object is arranged, within the angular range,
wherein only those data from the radar data which refer to the determined circular segment (32) are considered as the dynamic object data.

14. Method in accordance claim 11, comprising:
determining a position of at least one of the dynamic objects relative to the ego vessel (18); and
determining an extension of the corresponding dynamic object,
wherein only those data from the radar data which refer to the position and extension of the corresponding dynamic object are considered as the dynamic object data.

15. System for determining a motion of an ego vessel (18), comprising:
a memory configured for saving radar data, image data, solid object data, and/or dynamic object data; and
a processor configured for carrying out a method in accordance with claims 1 to 14.

16. Method for determining a map (20) for maritime navigation, comprising:
receiving radar data of a radar measurement of surroundings of an ego vessel (18);
receiving image data of one or more images (40) captured by a camera arranged on the ego vessel (18), wherein the one or more images (40) show one or more solid objects in the surroundings of the ego vessel (18);
determining dynamic object data from the image data, wherein the dynamic object data are representative for one or more dynamic objects of the solid objects shown in the image (40); and
determining the map (20) depending on the radar data and the dynamic object data.
